# EUROPEAN PATENT SPECIFICATION

(11) **EP 1 281 014 B1**
(45) Date of publication and mention of the grant of the patent: **08.02.2006**
(21) Application number: 01930391.6
(22) Date of filing: 10.05.2001
(51) Int. Cl.: F16K 11/085

(54) **MIXING VALVE**
MISCHVENTIL
ROBINET MELANGEUR

(30) Priority: 12.05.2000 SE 0001750
(43) Date of publication of application: 05.02.2003
(73) Proprietor: ESBE AB, 330 21 Reftele (SE)
(72) Inventor: BRUNNSGARD, Karl-Oskar, S-330 21 Reftele (SE)
(74) Representative: Andersson, Per-Olof
(86) International application number: PCT/SE2001/001017
(87) International publication number: WO 2001/086179

(56) References cited:
- JP-A- 60 237 270
- PATENT ABSTRACTS OF JAPAN & JP 60 237 270 A (MATSUSHITA DENKI SANGYO K.K.) 26 November 1985

## Description

### Technical Field

The present invention relates to a mixing valve for regulating a flow of liquid in a pipe system, which valve has a housing defining a circular-cylindrical chamber with several ports arranged around the circumference of a cylinder casing, to which ports the pipe system is connectible, and with a first end wall perpendicular to a cylinder axis and an opposite second end wall perpendicular to the cylinder axis, the first of which has an opening concentric with the cylinder axis, in which opening an operating spindle for a turning slide which is rotatable in the chamber is rotatingly mounted by means of at least one O-ring arranged on the operating spindle, the turning slide having a first circular side wall arranged adjacent to the first end wall of the chamber and parallel to this, from which side wall the operating spindle projects perpendicularly, and a second circular side wall arranged adjacent to the second end wall of the chamber and parallel with this, between which side walls there extends a casing wall which extends along part of the circumference of the side walls and is arranged to regulate the flow of liquid between the ports of the mixing valve by at least partially closing one or two of the ports depending upon the rotational position of the turning slide.

### Background of the Invention

With known mixing valves of the type described by way of introduction, it is always difficult to avoid a certain leakage of liquid past a port that is closed by means of the turning slide. The reason for this is that in order for it to rotate inside the valve housing, the turning slide must have a certain clearance. The known solutions for reducing this clearance, while retaining the ability of the turning slide to rotate, have often involved some kind of springs which were arranged to take up the whole turning slide or parts of this against the port that was to be shut off.

Disadvantages of the known solutions are that they are considerably more expensive to manufacture than solutions without such springs and, in addition, they are more difficult to install and to maintain than these. A further disadvantage is that when the differential pressure across the closed port becomes too high, the springs used have a tendency to yield and open the port more or less completely.

### Object of the Invention

Against this background, the object of the invention is to improve mixing valves as described in the preamble, so that the leakage which normally arises across a closed port is reduced or completely eliminated without significantly increasing the manufacturing, installation or maintenance costs of the mixing valve, with the mixing valve being able to tolerate high differential pressures across the closed port without tending to yield to these. In addition, the invention should preferably also be applicable to an existing mixing valve according to the preamble.

### Summary of the Invention

This object is achieved according to the invention by the second side wall having a circular seating for an O-ring, which is arranged to rotatingly mount the turning slide inside the valve housing, the operating spindle and the seating being eccentric in relation to the cylinder axis of the turning slide by being radially displaced in a direction away from the casing wall of the turning slide, so that when the turning slide is inserted into the valve housing and the casing wall is in contact with the inside of the cylinder casing, the O-rings on the operating spindle and the seating are compressed and the casing wall is thus pressed against the inside of the cylinder casing to make a tight seal with this.

It is recognised that the additional cost of the O-ring solution according to the invention is insignificant in,comparison to the known solution according to the preamble and that O-rings arranged according to the invention never fail at high differential pressures in the same way as the known spring solutions, thanks to the inherent characteristics of the O-rings. It is further recognised that the solution according to the invention is easily applicable to an existing mixing valve according to the preamble, by replacing this valve's turning slide with one with the characteristics according to the invention.

According to a preferred embodiment of the invention, said second side wall has a circular plateau against its side facing the adjacent second end wall, the edge surface of said plateau defining the circular seating for the O-ring which is in contact with the inside of the cylinder casing. Advantages of this solution are that the circular plateau is very simple to manufacture and that the inside of the cylinder casing does not need additional processing as the O-ring is in direct contact with this inside.

The latter also applies to an alternative embodiment where said second side wall instead has a circular peripheral groove, defining the circular seating for the O-ring, but the peripheral groove is somewhat more difficult to manufacture and the O-ring somewhat more difficult to install than with the preferred embodiment.

According to a further embodiment, said second side wall can have a stub shaft on its side facing the adjacent second end wall, defining the circular seating for the O-ring, said second end wall having an opening concentric with the cylinder axis, in which opening the stub shaft with the O-ring is rotatingly mounted. An advantage of this embodiment is that the suitable selection of the diameter of the stub shaft makes it possible to use the same kind of O-rings for both the operating spindle and the stub shaft. A disadvantage of this solution is, however, that it imposes the requirement of a suitably dimensioned opening in the second end wall.

### Brief Description of the Drawings

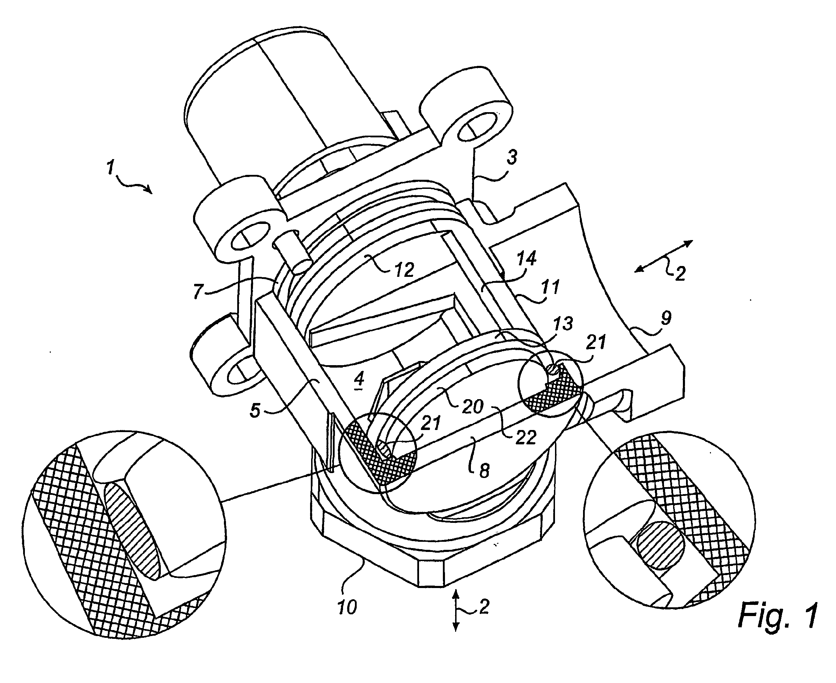

In the following, a preferred embodiment of the mixing valve according to the invention is described in greater detail with reference to the accompanying drawings, in which
Fig. 1 shows the mixing valve in a perspective view with certain parts cut away, and with two parts picked out and enlarged, and

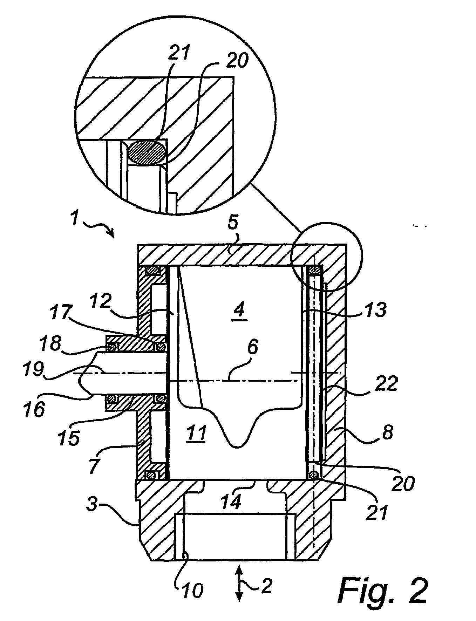

Fig. 2 shows the mixing valve in longitudinal section with one part picked out and enlarged.

### Description of a Preferred Embodiment

The mixing valve 1 shown in the drawings is intended for regulating a flow of liquid in a pipe system. This system is illustrated in the drawings by double arrows 2, indicating possible directions of flow.

The valve 1 has a housing 3, defining a circular-cylindrical chamber 4 with a cylinder casing 5 and two opposite end walls 7, 8, perpendicular to the cylinder axis 6. Three ports are arranged in the cylinder casing 5 around the circumference of the chamber 4. Of these, only ports 9 and 10 are shown in the drawings, as the third port belongs to one of the cut-away parts. The above-mentioned pipe system is connected to the three ports 9, 10.

Inside the chamber 4 of the mixing valve 1 there is a turning slide 11 mounted in such a way that it can rotate. The turning slide 11 has circular side walls 12, 13 adjacent to the end walls 7, 8 of the chamber 4 and parallel with these. Between these extends a casing wall 14, which extends along a part of the circumference of the side walls 12, 13 and is arranged to regulate the flow of liquid between the three ports 9, 10 of the mixing valve 1, by at least partially closing one or two of the three ports 9, 10 depending upon the rotational position of the turning slide 11.

To support the turning slide 11, the chamber's 4 one or first end wall 7 has a central opening 15, which consequently is concentric with the cylinder axis 6 of the chamber 4. In this opening 15 an operating spindle 16 for the turning slide, which is rotatingly mounted in the chamber 4, is flexibly supported by means of two O-rings 17, 18 arranged a distance apart, the operating spindle 16, which projects perpendicularly from the centre of one or the first side wall 12, extending along a longitudinal axis 19 of the turning slide 11 displaced in relation to said cylinder axis 6 in a direction away from the casing wall 14.

The other or second side wall 13 of the turning slide 11 has a circular seating 20 for an O-ring 21 which is in contact with the inside of the cylinder casing 5, the seating 20 consisting of the edge surface of a plateau 22 on the side of said second side wall 13 facing the second end wall 8. By this seating 20 being radially displaced in a direction away from the casing wall 14 of the turning slide 11 in a similar way to the operating spindle 16, that is by it being eccentric in relation to the cylinder axis 6 of the turning slide 11, the O-ring 21 is compressed onto it and the O-rings 17, 18 are compressed on the operating spindle 16 when the casing wall 14 is in contact with the inside of the cylinder casing 5 and the casing wall 14 is thus pressed to make a tight seal with the inside of the cylinder casing.

It is recognised that the O-ring seating 20 can be designed in different ways within the scope of the invention. The embodiment illustrated in the drawings is the simplest and currently preferred embodiment. The advantages of this embodiment are that a turning slide 11 with such an O-ring seating 20 is very simple to manufacture and that the turning slide 11 often fits in existing valve housings. This means that it is also possible to apply the invention to existing mixing valves without major difficulties, for example when carrying out routine reconditioning of these.

Alternative not shown embodiments can, instead of the shown O-ring seating, comprise a peripheral O-ring groove in the second side wall 13 of the turning slide or a stub shaft projecting from this side wall 13 with the advantages and disadvantages this entails as described above.

## Claims

1. A mixing valve for regulating a flow of liquid in a pipe system (2), which valve has a housing (3), defining a circular-cylindrical chamber (4) with several ports (9, 10) arranged around the circumference of a cylinder casing (5), to which ports the pipe system (2) is connectible, and with a first end wall (7) perpendicular to a cylinder axis (6) and an opposite second end wall (8) perpendicular to the cylinder axis (6), of which the first has an opening (15) concentric with the cylinder axis (6), in which opening an operating spindle (16) of a turning slide (11) which is rotatable in the chamber (4) is rotatingly mounted by means of at least one O-ring (17, 18) arranged on the operating spindle (16), the turning slide (11) having a first circular side wall (12) arranged adjacent to the first end wall (7) of the chamber (4) and parallel with this, from which side wall the operating spindle (16) projects perpendicularly, and a second circular side wall (13) arranged adjacent to the second end wall (8) of the chamber (4) and parallel with this, between which side walls (12, 13) a casing wall (14) extends, which casing wall extends along part of the circumference of the side walls (12, 13) and is arranged to regulate the flow of liquid between the ports (9, 10) of the mixing valve by at least partially closing one or two of the ports (9, 10) depending upon the rotational position of the turning slide (11), **characterised in that** the second side wall (13) has a circular seating (20) for an O-ring (21), which is arranged to rotatingly mount the turning slide (11) inside the valve housing (3), the operating spindle (16) and the seating (20) being eccentric in relation to the cylinder axis (6) of the turning slide (11) by being radially displaced in a direction away from the casing wall (14) of the turning slide (11), so that when the turning slide (11) is inserted into the valve housing (3) and the casing wall (14) is in contact with the inside of the cylinder casing (5), the O-rings (17, 18, 21) on the operating spindle (16) and on the seating (20) are compressed and the casing wall (14) is thus pressed against the inside of the cylinder casing to make a tight seal with this.

2. A mixing valve according to claim 1, **characterised in that** said second side wall (13) has a circular plateau (22) on its side facing the adjacent second end wall (8), the edge surface of said plateau defining the circular seating (20) for the O-ring (21) which is in contact with the inside of the cylinder casing (5) .

3. A mixing valve according to claim 1, **characterised in that** said second side wall (13) has a circular peripheral groove, defining the circular seating for the O-ring which is in contact with the inside of the cylinder casing (5).

4. A mixing valve according to claim 1, **characterised in that** said second side wall (13) has a stub shaft on its side facing the adjacent second end wall (8), which stub shaft defines the circular seating for the O-ring, said second end wall (8) having an opening concentric with the cylinder axis (6), in which opening the stub shaft with the O-ring is rotatingly mounted.

## Patentansprüche

1. Mischventil zum Regulieren eines Stroms von Fluid in einem Rohrsystem (2), wobei das Ventil ein Gehäuse (3) hat, das eine kreiszylindrische Kammer (4) mit verschiedenen Anschlüssen (9, 10) bildet, die um den Umfang einer Zylinderverkleidung (5) herum angeordnet sind, wobei das Rohrsystem (2) mit den Anschlüssen verbunden werden kann, sowie mit einer ersten Stirnwand (7) senkrecht zu einer Zylinderachse (6) und einer gegenüberliegenden zweiten Stirnwand (8) senkrecht zu der Zylinderachse (6), wobei die erste eine Öffnung (15) konzentrisch zu der Zylinderachse (6) hat und in der Öffnung eine Betätigungsspindel (1.6) eines Drehschiebers (11), der in der Kammer (4) gedreht werden kann, mittels wenigstens eines O-Rings (17, 18), der an der Betätigungsspindel (16) angeordnet ist, drehbar angebracht ist, wobei der Drehschieber (11) eine erste kreisförmige Seitenwand (12), die an die erste Stirnwand (7) der Kammer (4) angrenzend und parallel dazu angeordnet ist, hat, wobei von dieser Seitenwand die Betätigungsspindel (16) senkrecht vorsteht, und eine zweite kreisförmige Seitenwand (13), die an die zweite Stirnwand (8) der Kammer (4) angrenzend und parallel dazu angeordnet ist, wobei sich zwischen den Seitenwänden (12, 13) eine Verkleidungswand (14) erstreckt und sich die Verkleidungswand entlang eines Teils des Umfangs der Seitenwände (12, 13) erstreckt und so eingerichtet ist, dass sie den Strom von Fluid zwischen den Anschlüssen (9, 10) des Mischventils reguliert, indem sie einen der beiden Anschlüsse (9, 10), oder beide, in Abhängigkeit von der Drehposition des Drehschiebers (11) wenigstens teilweise schließt, **dadurch gekennzeichnet, dass** die zweite Seitenwand (13) eine kreisförmige Aufnahme (20) für einen O-Ring (21) hat, der so eingerichtet ist, dass er den Drehschieber (11) drehbar im Inneren des Ventilgehäuses (3) anbringt, wobei die Betätigungsspindel (16) und die Aufnahme (20) in Bezug auf die Zylinderachse (6) des Drehschiebers (11) exzentrisch sind, da sie in einer Richtung von der Verkleidungswand (14) des Drehschiebers (11) weg radial verschoben sind, so dass, wenn der Drehschieber (11) in das Ventilgehäuse (3) eingeführt ist und die Verkleidungswand(14) in Kontakt mit der Innenseite der Zylinderverkleidung (5) ist, die O-Ringe (17, 18, 21) an der Betätigungsspindel (16) und an der Aufnahme (20) zusammengedrückt werden und die Verkleidungswand (14) so an die Innenseite des Zylindergehäuses gedrückt wird, um eine feste Dichtung damit herzustellen.

2. Mischventil nach Anspruch 1, **dadurch gekennzeichnet, dass** die zweite Seitenwand (13) ein kreisförmiges Plateau (22) an ihrer der angrenzenden zweiten Stirnwand (8) zugewandten Seite hat, wobei die Kantenfläche des Plateaus die kreisförmige Aufnahme (20) für den O-Ring (21) bildet, der in Kontakt mit der Innenseite der Zylinderverkleidung (5) ist.

3. Mischventil nach Anspruch 1, **dadurch gekennzeichnet, dass** die zweite Seitenwand (13) eine kreisförmige Umfangsnut hat, die die kreisförmige Aufnahme für den O-Ring bildet, der in Kontakt mit der Innenseite der Zylinderverkleidung (5) ist.

4. Mischventil nach Anspruch 1, **dadurch gekennzeichnet, dass** die zweite Seitenwand (13) einen Wellenstumpf an ihrer der angrenzenden zweiten Stirnwand (8) zugewandten Seite hat, wobei der Wellenstumpf die kreisförmige Aufnahme für den O-Ring bildet und die zweite Stirnwand (8) eine Öffnung konzentrisch zu der Zylinderachse (6) hat, und in der Öffnung der Wellenstumpf mit dem O-Ring drehbar angebracht ist.

## Revendications

1. Vanne de mélange permettant de réguler un écoulement de liquide dans un système de tuyau (2), laquelle vanne comprend un boîtier (3), définissant une chambre circulaire cylindrique (4) avec plusieurs orifices (9, 10) agencés autour de la circonférence d'une enveloppe de cylindre (5), auxquels orifices le système de tuyau (2) peut être raccordé, et avec une première paroi d'extrémité (7) perpendiculaire à un axe de cylindre (6) et une seconde paroi d'extrémité opposée (8) perpendiculaire à l'axe de cylindre (6), dont la première a une ouverture (15) concentrique avec l'axe de cylindre (6), dans laquelle ouverture une broche de commande (16) d'une glissière rotative (11) qui peut tourner dans la chambre (4), est montée de manière rotative au moyen d'au moins un joint torique (17, 18) agencé sur la broche de commande (16), la glissière rotative (11) ayant une première paroi latérale circulaire (12) agencée de manière adjacente à la première paroi d'extrémité (7) de la chambre (4) et parallèle à celle-ci, à partir de laquelle paroi latérale la broche de commande (16) fait saillie perpendiculairement, et une seconde paroi latérale circulaire (13) agencée de manière adjacente à la seconde paroi d'extrémité (8) de la chambre (4) et parallèle à celle-ci, entre lesquelles parois latérales (12, 13) une paroi de carter (14) s'étend, laquelle paroi de carter s'étend le long d'une partie de la circonférence des parois latérales (12, 13) et est agencée pour réguler l'écoulement du liquide entre les orifices (9, 10) de la vanne de mélange en fermant au moins partiellement un ou deux des orifices (9, 10) en fonction de la position rotationnelle de la glissière rotative (11), **caractérisé en ce que** la seconde paroi latérale (13) a un siège circulaire (20) pour un joint torique (21) qui est agencé pour monter de manière rotative la glissière rotative (11) à l'intérieur du boîtier (3) de la vanne, la broche de commande (16) et le siège (20) étant excentriques par rapport à l'axe de cylindre (6) de la glissière rotative (11) en étant déplacés radialement dans une direction à distance de la paroi de carter (14) de la glissière rotative (11), de sorte que lorsque la glissière rotative (11) est insérée dans le boîtier (3) de la vanne et que la paroi de carter (14) est en contact avec l'intérieur de l'enveloppe de cylindre (5), les joints toriques (17, 18, 21) sur la broche de commande (16) et sur le siège (20) sont comprimés et la paroi de carter (14) est donc comprimée contre l'intérieur de l'enveloppe de cylindre pour réaliser un joint d'étanchéité avec celle-ci.

2. Vanne de mélange selon la revendication 1, **caractérisé en ce que** ladite seconde paroi latérale (13) a un plateau circulaire (22) sur son côté faisant face à la seconde paroi d'extrémité (8), la surface de bord dudit plateau définissant un siège circulaire (20) pour le joint torique (21) qui est en contact avec l'intérieur de l'enveloppe de cylindre (5).

3. Vanne de mélange selon la revendication 1, **caractérisé en ce que** ladite seconde paroi latérale (13) a une rainure périphérique circulaire, définissant le siège circulaire pour le joint torique qui est en contact avec l'intérieur de l'enveloppe de cylindre (5).

4. Vanne de mélange selon la revendication 1, **caractérisé en ce que** ladite seconde paroi latérale (13) a un arbre tronqué sur son côté faisant face à la seconde paroi d'extrémité (8), lequel arbre tronqué définit le siège circulaire pour le joint torique, ladite seconde paroi d'extrémité (8) ayant une ouverture concentrique avec l'axe de cylindre (6), dans laquelle ouverture est monté de manière rotative l'arbre tronqué conjointement au joint torique.
